(19) **Europäisches Patentamt / European Patent Office / Office européen des brevets**

(11) **EP 4 295 114 B1**

(12) **FASCICULE DE BREVET EUROPEEN**

(45) Date de publication et mention de la délivrance du brevet:
**28.05.2025 Bulletin 2025/22**

(21) Numéro de dépôt: **22705542.3**

(22) Date de dépôt: **15.02.2022**

(51) Classification Internationale des Brevets (IPC):
**G01C 19/567** (2012.01)     **G01C 19/5719** (2012.01)
**G01C 21/16** (2006.01)     **G01C 25/00** (2006.01)

(52) Classification Coopérative des Brevets (CPC):
**G01C 25/005; G01C 19/567; G01C 19/5719; G01C 21/188**

(86) Numéro de dépôt international:
**PCT/EP2022/053618**

(87) Numéro de publication internationale:
**WO 2022/175240 (25.08.2022 Gazette 2022/34)**

(54) **PROCEDE DE CORRECTION DE LA MESURE D'UN CAPTEUR INERTIEL ANGULAIRE VIBRANT**

VERFAHREN ZUR KORREKTUR DER MESSUNG EINES VIBRIERENDEN INERTIALWINKELSENSORS

METHOD FOR CORRECTING THE MEASUREMENT FROM A VIBRATING ANGULAR INERTIAL SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2021 FR 2101546**

(43) Date de publication de la demande:
**27.12.2023 Bulletin 2023/52**

(73) Titulaire: **THALES**
**92190 Meudon (FR)**

(72) Inventeurs:
• **VERCIER, Nicolas**
**26027 Valence Cedex (FR)**
• **COATANTIEC, Jacques**
**26027 Valence Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**WO-A1-2010/072922     WO-A1-2016/189078**
**FR-A1- 2 939 192**

## Description

### DOMAINE TECHNIQUE DE L'INVENTION

Le domaine de l'invention est celui des capteurs inertiels vibrants dans lesquels au moins deux masses sont mises en vibration, voire une seule masse comportant au moins deux parties, une masse ou une partie de masse étant apte à se déformer par rapport à l'autre. Sans que cela soit limitatif, l'invention concerne notamment des capteurs inertiels de type MEMs pouvant présenter une structure plane, par exemple des capteurs micro usinés dans une plaque de support. L'invention concerne un procédé de mesure angulaire (angle ou vitesse angulaire) et en particulier un procédé de correction d'une telle mesure.

### ETAT DE LA TECHNIQUE

Les capteurs inertiels vibrants (ou à diapason) sont connus de l'homme de l'art. Un capteur inertiel vibrant comprend un résonateur, qui peut être axisymétrique, mais pas nécessairement, associé à des moyens de mise en vibration du résonateur et à des moyens de détection d'une orientation de la vibration (onde de vibration) par rapport à un repère du capteur. Ces moyens comprennent généralement au moins deux groupes d'actionneurs solidaires du boîtier du capteur et/ou du résonateur et au moins deux groupes de détecteurs également solidaires du boîtier et/ou du résonateur.

Par souci de simplification, un capteur inertiel angulaire peut être désigné indifféremment dans l'ensemble de la présente description par « capteur inertiel » ou « capteur angulaire » voire « capteur ».

Un tel capteur est disposé sur un porteur afin de mesurer les valeurs d'angle et/ou de vitesse angulaire dudit porteur. Le porteur peut être tout ou partie d'un avion, d'un bateau, d'un train, d'un camion, d'une voiture, d'un satellite ou de tout autre véhicule aérien, terrestre ou maritime.

Il existe notamment des capteurs inertiel micro-usinés dans une plaque mince plane, permettant la mesure d'une position angulaire (gyroscope) ou d'une vitesse angulaire (gyromètres), qui sont notamment décrits dans le document EP2960625. On en rappelle ci-dessous les principales caractéristiques.

La fabrication de ces capteurs micro-usinés dits encore capteurs « MEMS » (pour « Micro-Electro-Mechanical-Systems » en anglais) utilise des techniques de micro-usinage collectif, de gravure, dépôt de dopage, etc., semblables à celles qui sont utilisées pour la fabrication de circuits intégrés électroniques, permettant des faibles coûts de production.

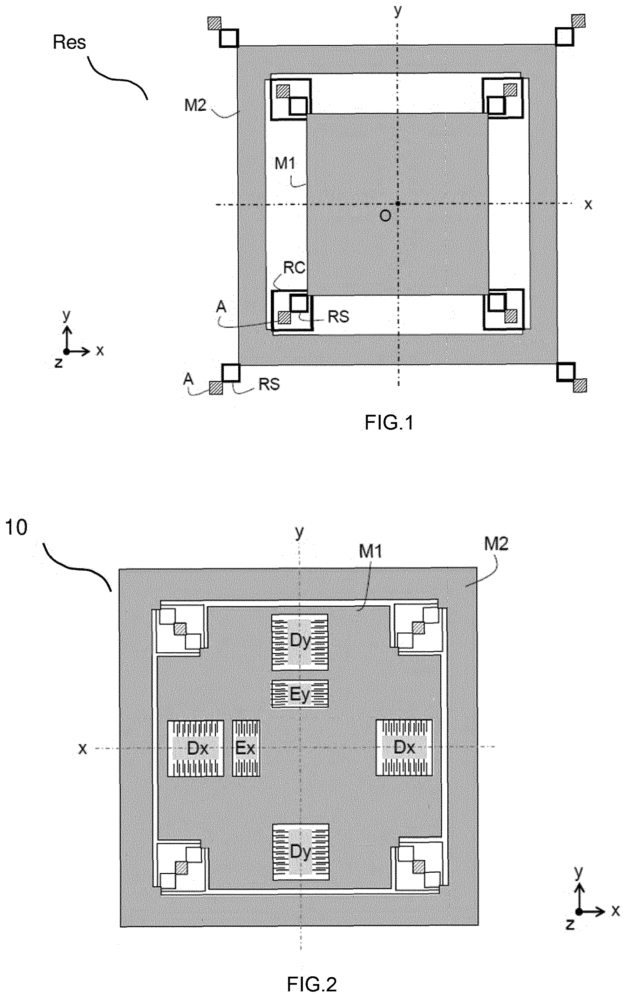

Les capteurs MEMS décrits dans la demande EP2960625 sont constitués de deux masses mobiles vibrantes M1 et M2 illustrées en figure 1 disposées l'une autour de l'autre de manière concentrique et excitées en vibration en mode diapason dans le plan de la plaque (plan xy sur la figure 1) via un ou plusieurs transducteurs d'excitation. Les deux masses sont suspendues à des points d'ancrage fixes A de la plaque par des ressorts de suspension RS (orthotropes). Les deux masses sont couplées entre elles par des éléments de raideurs RC. On vise généralement à obtenir par construction une raideur selon x égale à une raideur selon y et une raideur de couplage entre x et y nulle. Le mode de vibration utile correspond à une vibration linéaire des deux masses en opposition de phase.

Plus généralement, il peut s'agir de plus de deux masses mobiles, par exemple de quatre masses mobiles, ou à l'inverse d'une seule masse comportant au moins deux parties, l'une étant apte à se déformer par rapport à l'autre, par exemple sur un micro gyromètre résonnant hémisphérique ($\mu$GRH).

La structure décrite dans la demande EP2960625 forme un système résonnant (dit « résonateur ») à deux masses couplées entre elles par l'accélération de Coriolis. Lorsque le capteur tourne autour de l'axe z perpendiculaire au plan xy, l'axe z étant dénommé « axe sensible », la composition de la vibration forcée avec le vecteur de rotation angulaire engendre, par effet Coriolis, des forces qui mettent les masses mobiles en vibration naturelle perpendiculairement à la vibration d'excitation et à l'axe sensible ; l'amplitude de la vibration naturelle est proportionnelle à la vitesse de rotation. L'électronique associée au capteur calcule l'amplitude de la vibration naturelle selon la direction orthogonale à la direction d'excitation quelle que soit celle-ci (connue par hypothèse).

Le capteur peut fonctionner en mode gyromètre : la direction d'excitation est maintenue fixe en modifiant l'excitation, et par conséquent l'axe perpendiculaire à cette vibration est maintenue fixe par rapport au boîtier du capteur et l'information de sortie est alors une image de l'énergie nécessaire qu'il faut appliquer aux transducteurs d'excitation pour maintenir fixe la direction de vibration naturelle malgré les mouvements du boîtier. La mesure de cette énergie (ou « contre force ») donne accès à la vitesse angulaire $\Omega$ du capteur.

Le capteur peut aussi fonctionner en mode gyroscope : la direction de la vibration d'excitation est laissée libre et est détectée pour donner l'orientation angulaire du capteur **par rapport** à un repère inertiel, qui peut être également et simplement nommée « angle ». On peut également déduire la vitesse angulaire du capteur en dérivant la mesure d'angle.

L'ensemble de la structure du résonateur décrite dans la demande EP2960625 est axisymétrique autour des deux axes x et y définissant un repère capteur tel qu'illustré en figure 1. On entend par axisymétrique que la structure est symétrique par rapport à x et symétrique par rapport à y. Mais il faut comprendre que cette définition peut couvrir toutes les dissymétries mineures possibles. Comme décrit ci-dessous, ces axes constituent les directions principales des actionneurs et détecteurs, qui opèrent selon ces deux axes.

Pour exciter le mode de vibration utile dans une direction donnée quelconque du plan, on décompose le signal d'excitation en deux composantes d'amplitudes respectives ajustées. Comme illustré en figure 2, les deux composantes d'amplitudes peuvent être appliquées respectivement au transducteur d'excitation Ex agissant selon la direction x et au transducteur d'excitation Ey agissant selon la direction y, les deux transducteurs d'excitation étant associés à au moins une masse mobile (masse interne M1 sur la figure 2). On applique donc à ces transducteurs des forces d'excitation pour générer et entretenir l'onde de vibration: ils sont aptes à entretenir la vibration forcée via une commande d'amplitude Ca (lutter contre l'amortissement du capteur) et selon n'importe quelle direction du plan xy, via une commande de précession Cp (faire tourner l'onde).

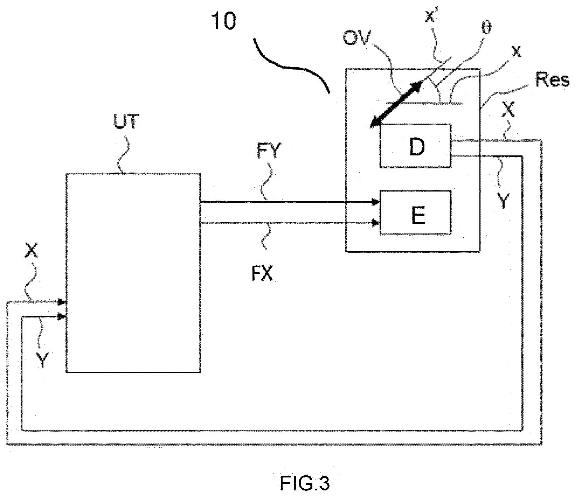

On dénomme axe x' l'axe de vibration de l'onde. Cet axe définit un repère x'y', avec y' perpendiculaire à x' dans le plan du capteur (pour rappel, les axes principaux du capteur sont x et y). L'axe x' fait avec l'axe x un angle Θ dénommé « angle électrique » et le repère x'y' est dénommé « repère onde ». Ceci est illustré en figure 3.

Les forces d'excitation FX et FY appliquées suivant l'axe x et l'axe y du capteur sont issues de commandes Cr, Ca, Cq et Cp calculées dans le repère onde par des asservissements connus de l'homme de l'art, à partir de la démodulation des signaux détectés relatifs au déplacement de la vibration. A partir des mesures du mouvement de l'onde X et Y réalisés dans le repère xy, on applique une rotation pour passer dans le repère onde x'y', puis les commandes sont déterminées (via une démodulation de signaux détectés) et on réapplique une rotation inverse pour repasser dans le repère capteur xy, dans lequel sont appliquées les forces d'excitation. Les commandes sont déterminées de sorte que le déplacement de la masse, c'est-à-dire l'onde de vibration du capteur, prenne une forme voulue. Généralement la forme souhaitée de l'onde est un déplacement linéaire oscillant dans la direction x' par rapport au repère xy du capteur. Mais l'onde est généralement de forme elliptique, sensiblement plate selon la direction perpendiculaire à la direction x' (en d'autres termes le petit axe de l'ellipse est très faible relativement au grand axe, lequel grand axe correspond à la direction donnée).

La commande Cr correspond aux forces de raideur pour contrôler la fréquence propre du résonateur. Comme la phase est reliée à l'intégrale de la fréquence, Cr contrôle donc la phase de l'onde.

La commande Ca correspond aux forces d'amplitude pour compenser l'effet des forces d'amortissement du capteur et maintenir constante l'amplitude de la vibration : elle permet donc de contrôler l'amplitude de l'onde.

La commande Cp correspond aux forces de précession qui permettent de contrôler la vitesse angulaire de l'onde.

Dans le cas d'un capteur fonctionnant en mode gyromètre, une commande de précession Cp est appliquée de sorte à asservir l'orientation de la vibration (ou angle électrique) à une valeur de consigne constante.

La commande Cq correspond aux forces de quadrature pour contrôler la quadrature de l'onde, c'est-à-dire garantir la linéarité de l'onde ou, quand l'onde souhaitée n'est pas linéaire, elle est généralement elliptique, Cq permet de contrôler le petit axe de l'ellipse.

On détecte les mouvements de l'onde résultante en combinant l'information recueillie par au moins une paire de transducteurs de détection Dx, Dy récupérant la position de la masse dans sa course dans le repère capteur xy et associés à au moins une masse mobile (M1 sur la figure 2). Dans la figure 2, sont représentées deux paires de transducteurs de détection Dx, Dy.

Selon une variante connue et avantageuse, on peut réaliser des transducteurs sur les deux masses M1 et M2 (non représenté). La figure 2 et cette variante constituent des exemples d'agencement non limitatifs, beaucoup d'autres types d'agencement sont possibles, avec la contrainte de réaliser un système axisymétrique.

Le capteur ainsi formé d'un résonateur Res associé aux transducteurs d'excitation E et de détection D est relié à une unité de traitement UT, comme illustré en figure 3. FX et FY sont les forces d'excitation appliquées suivant l'axe x et l'axe y du capteur, X et Y sont les mesures du mouvement de l'onde dans le repère du capteur xy. L'onde de vibration OV vibre selon x' avec un angle électrique θ. L'unité de traitement UT procède aux différents calculs pour les asservissements et génère, pour les corrections, l'ensemble des commandes/forces précitées Cr, Ca, Cq et Cp aux différents transducteurs. Dans l'unité de traitement UT, les mouvements détectés X et Y sont d'abord transformés dans le repère onde x'y' par une rotation selon θ puis les commandes d'excitation sont déterminées dans le repère onde par des asservissements sous la forme de tensions électriques U'x et U'y avec, par exemple :

$$U'_x = iC_a + C_r$$

$$U'_y = iC_p + C_q$$

Les transducteurs sont préférentiellement réalisés par des électrodes en peigne interdigités à variation d'entrefer. Il y a un peigne fixe dont les dents sont solidaires d'une masse fixe de la plaque usinée et un peigne mobile dont les dents, interdigitées avec les dents du peigne fixe, sont solidaires de la masse mobile associée au transducteur considéré.

L'excitation consiste à appliquer une force d'excitation via une tension alternative entre le peigne mobile et le peigne fixe, à la fréquence de vibration souhaitée (fréquence de résonance mécanique de la masse mobile suspendue, typiquement de l'ordre de quelques KHz). Le mouvement engendré est perpendiculaire aux dents du peigne.

La détection consiste à appliquer une tension de polarisation entre le peigne fixe et le peigne mobile et à observer les variations de charge qui résultent des variations de capacité entre le peigne fixe et le peigne mobile dues aux variations d'espacement entre les dents du peigne fixe et du peigne mobile. Le mouvement mesuré est le mouvement perpendiculaire aux dents du peigne. Alternativement, dans une autre configuration, on peut mesurer le mouvement longitudinal aux dents des peignes.

Sous l'effet des défauts de réalisation, les mesures fournies par ces capteurs inertiels vibrants axisymétriques présentent des défauts de mesure ou « dérives » (défaut d'estimation de la vitesse angulaire en mode gyromètre ou de l'angle en mode gyroscope), et ont pour effet de dégrader le niveau de précision des valeurs ainsi mesurées, et ce, qu'ils soient utilisés en mode gyroscope ou en mode gyromètre.

Il est connu que la dérive du capteur varie en fonction de l'angle électrique $\theta$. Il est également connu qu'un capteur inertiel vibrant axisymétrique possède, après calibration des défauts électroniques et d'équilibrage, une dérive moyenne (qui est définie comme étant la dérive obtenue en faisant la moyenne des dérives obtenues pour différents angles électriques uniformément répartis) très faible, typiquement entre dix et cent fois plus faible que la dérive maximale dudit capteur pour un angle électrique donné.

Pour mesurer une vitesse angulaire ou un angle dont le défaut est la dérive moyenne, une solution est de faire tourner l'onde de vibration. Pour pouvoir faire tourner l'onde de vibration il faut envoyer une commande de rotation qui va se retrouver dans le signal de sortie. La suppression de cette commande de rotation (bien que connue) de la sortie du capteur n'est pas simple car ladite commande est déformée par la fonction de transfert du capteur entre la commande injectée et la commande se retrouvant sur le signal dudit capteur, et qu'il ne suffit donc pas simplement de retrancher la commande de rotation pour retrouver le signal utile.

Par fonction de transfert du capteur, on entend la fonction qui a en entrée une vitesse angulaire injectée et en sortie la vitesse angulaire mesurée.

De nombreux brevets exploitent la commande de rotation de l'onde et sa correction, par exemple dans le brevet US 6,598,455 B1 qui concerne un procédé d'étalonnage d'un gyroscope vibrant MEMS comprenant l'introduction d'un signal de rotation simulé dans le gyroscope, la détection du mouvement créé par le signal de rotation simulé et la combinaison d'un signal de correction du mouvement détecté avec le signal de rotation simulé. Plus précisément, des éléments électrostatiques déjà présents dans le gyroscope vibrant MEMS sont utilisés pour simuler les forces de Coriolis, et le signal de rotation simulé est ajouté au système de rééquilibrage de la force d'excitation en boucle fermée pour effectuer un test inertiel sur des gyroscopes vibrants MEMS, et ce, sans l'utilisation d'une table de rotation. Cependant, l'envoi d'un tel signal perturbe la mesure du capteur et génère des erreurs du fait du facteur d'échelle, et le brevet précité ne donne pas de moyens pour supprimer ces erreurs générées si on veut exploiter la méthode en temps réel et pas seulement lors d'une calibration.

Par facteur d'échelle, on entend le rapport entre la vitesse angulaire (ou plus largement valeur angulaire) mesurée en sortie, à laquelle le biais de mesure a été supprimé et la vitesse angulaire (ou plus largement valeur angulaire) commandée en entrée (injectée électriquement pour un facteur d'échelle électrique ou par rotation du capteur pour un facteur d'échelle mécanique).

Des solutions sont connues pour annuler l'erreur de facteur d'échelle, et réduire les erreurs générées par la solution précédemment décrite. La demande de brevet EP0392104 A1 par exemple décrit un capteur dans lequel l'axe sensible est tourné de 180° pour annuler l'erreur de facteur d'échelle. Dans d'autres demandes de brevet FR 2 937 414, FR 2 959 009 et FR 2 958 029, les solutions pour annuler l'erreur de facteur d'échelle qui correspondent à une combinaison des brevets US 6,598,455 B1 et EP0392104 A1 précédemment décrites et consistent à envoyer une commande de rotation de l'onde sur une valeur de consigne adaptée pour faire tourner l'onde dans un sens puis dans le sens inverse, avec un signal de commande à moyenne nulle sur une période de temps donnée (FR 2 937 414 et FR 2 958 029), et éventuellement en ajoutant une étape où la dérivée temporelle de la consigne est déduite de la commande (FR 2 958 029). Dans ces deux brevets FR 2 937 414 et FR 2 958 029, le problème est qu'il ne suffit pas de retrancher la commande introduite pour annuler les erreurs induites par ladite commande sur le capteur, car ladite commande de rotation est déformée par la fonction de transfert du capteur, comme expliqué plus avant. Ainsi, ces solutions induisent des nouvelles erreurs dans la mesure. En outre, dans la demande de brevet FR 2 959 009, il est prévu de supprimer ces nouvelles erreurs induites par la commande de rotation de l'onde, en utilisant un capteur externe de référence. Ainsi, on vient compenser l'erreur introduite par la commande à l'aide d'un capteur externe supplémentaire.

D'autres procédés et dispositifs de calibration du facteur d'échelle d'un gyroscope vibrant à résonateur axisymétrique sont également décrits dans les documents WO 2010/072922 A1, WO 2016/189078 A1 et FR 2 939 192 A1.

Ainsi, les solutions proposées sont basées sur des commandes de rotation qui engendrent de nouvelles erreurs. On constate que faire tourner l'onde dans un sens en permanence permet de bénéficier de la dérive moyenne mais une nouvelle dérive engendrée par le facteur d'échelle apparait, et que faire tourner l'onde dans un sens puis dans le sens inverse induit des erreurs qu'on ne peut pas aisément retrancher du fait de la fonction de transfert du capteur. En outre, l'utilisation d'une mesure externe fournissant une valeur de sortie de référence génère un système plus gros, plus cher, qui consomme plus.

L'invention vise à surmonter les inconvénients précités de l'art antérieur.

Plus particulièrement elle vise à disposer d'une méthode de correction de la mesure d'un capteur inertiel, qui permette de réduire les erreurs de mesure et qui ne nécessite pas de capteur de référence supplémentaire.

## EXPOSE DE L'INVENTION

Un premier objet de l'invention permettant de remédier à ces inconvénients est un procédé de correction de la mesure d'un capteur inertiel, ledit capteur inertiel étant disposé sur un porteur et comprenant un résonateur s'étendant autour de deux axes x et y perpendiculaires entre eux définissant un repère capteur xy et comprenant :

-   au moins une masse mobile vibrante, ladite au moins une masse mobile comportant au moins deux parties configurées pour vibrer en opposition de phase à une pulsation de vibration et selon une direction x' définissant un repère onde x'y', l'onde de vibration selon x' faisant un angle électrique $\theta$ par rapport à l'axe x ;
-   une pluralité de transducteurs électrostatiques commandés par des tensions électriques et opérant selon les deux axes x ou y, lesdits transducteurs comprenant au moins :

    -- une paire de transducteurs de détection configurés pour détecter les mouvements de l'onde de vibration selon x et y ; et
    -- une paire de transducteurs d'excitation auxquels sont appliquées des forces d'excitation respectivement selon x et y, via une pluralité de commandes d'excitation déterminées par des asservissements à partir des mouvements détectés, configurés pour maintenir l'onde à une amplitude constante via une commande d'amplitude et, éventuellement, pour faire tourner ladite onde de vibration via une commande de précession ;
    le procédé de correction s'appliquant lorsque le capteur est en fonctionnement avec une onde de vibration vibrant selon l'axe x' ;
    ledit procédé comprenant les étapes consistant, lorsque le porteur est sensiblement à l'arrêt, à :

    **A** commander une rotation électrique de l'onde de vibration selon une valeur angulaire commandée $\Omega c$, de telle manière que l'angle électrique $\theta$ balaie au moins une plage angulaire de $k\pi$ radians, k étant un entier supérieur ou égal à 1, selon lequel la valeur angulaire est comprise dans l'ensemble comportant une vitesse angulaire et un angle ; puis
    **B** récupérer les valeurs angulaires mesurées $\Omega e$ par le capteur inertiel sur la plage angulaire de $k\pi$ radians de l'angle électrique $\theta$ pour la valeur angulaire commandée $\Omega c$, et déterminer la moyenne $\Omega em$ desdites valeurs angulaires mesurées sur ladite plage angulaire ; puis
    **C** retrancher la valeur angulaire commandée $\Omega c$ à la moyenne $\Omega em$ des valeurs angulaires mesurées;
    les étapes **A** à **C** étant réalisées pour au moins deux valeurs angulaires commandées différentes de manière à déterminer au moins deux moyennes des valeurs angulaires mesurées ; puis
    **D** déterminer :

    -   l'erreur de facteur d'échelle électrique moyen FEem, le facteur d'échelle électrique correspondant au rapport entre la valeur angulaire mesurée due à la commande de rotation électrique et la valeur angulaire commandée $\Omega c$, et
    -   la valeur angulaire réelle $\Omega v$ du porteur additionnée d'une valeur de dérive Dm du capteur,

    ladite détermination étant réalisée à partir des valeurs angulaires commandées $\Omega c$ et des moyennes $\Omega em$ des valeurs angulaires mesurées, selon la formule :

$$\Omega em - \Omega c \ = (\Omega v + Dm) + FEem.\Omega c.$$

La valeur angulaire mesurée par le capteur est définie comme étant soit une vitesse angulaire (en mode gyromètre) soit un angle (en mode gyroscope) du porteur. Elle peut être désignée par valeur angulaire « estimée ». De même, la valeur angulaire réelle du porteur est définie comme étant soit la vitesse angulaire réelle, soit l'angle réel dudit porteur.

Par « moyenne », on entend une moyenne sur différents angles électriques répartis, de préférence uniformément, sur la plage angulaire de $k\pi$ radians.

Par porteur « sensiblement à l'arrêt », on entend que le porteur a une dynamique nulle (par exemple le porteur est un avion à l'arrêt sans passagers et sans équipage à bord) ou une dynamique faible (par exemple le porteur est un avion à l'arrêt avec des passagers et/ou équipage à bord). En d'autres termes, une dynamique faible correspond à des mouvements de roulis et de tangage de l'ordre de quelques degrés et des mouvements de translation selon l'axe vertical pour que les accéléromètres horizontaux détectent la rotation, avec un cap considéré comme constant. Alternativement à un avion, il peut s'agir d'un bateau, d'un train, d'un camion, d'une voiture, d'un satellite ou tout véhicule aérien, terrestre ou maritime.

La présente invention consiste à venir commander une rotation de l'onde de vibration lorsque la dynamique du porteur est nulle ou du moins faible, de manière à pouvoir supprimer les défauts engendrés sur le signal de mesure par la commande de rotation.

Avec une commande de rotation alternative (rotation dans un sens et dans un autre) et à moyenne nulle, le défaut engendré par le changement de rotation est élevé et provient du fait que la bande passante du capteur n'est pas infinie. Au moment du changement de sens de la rotation, le capteur voit un échelon en entrée et l'erreur sur la mesure sera la partie haute fréquence de l'échelon non prise en compte dans la fonction de transfert du capteur. En d'autres termes, la rotation commandée a un spectre limité (comme tout signal physique qui n'a pas une énergie infinie). Si une partie du spectre est en dehors de la bande passante du capteur, il ne sera pas détecté par le capteur et donc si on retranche en sortie la commande de rotation injectée (on doit l'enlever car ce n'est pas une rotation physique du porteur), il restera une erreur liée au fait que le capteur n'a détecté qu'une partie de la rotation commandée. Selon l'invention, on ne commande pas une rotation alternative à moyenne nulle.

Avec une commande envoyée non alternative, correspondant au mode de réalisation préféré de l'invention, on aura une erreur au moment de l'arrêt de la commande de rotation ou si on commande des vitesses de rotation différentes. L'origine de l'erreur est la même que pour une commande de rotation alternative à moyenne nulle, comme décrit ci-dessus. Il est possible d'introduire la commande dans un modèle de fonction de transfert connu du gyromètre, cependant cette représentation mathématique peut ne pas être suffisamment précise (en tout cas pas suffisamment pour obtenir les ordres de grandeur de précision voulus de l'ordre de quelques dizaines de $\mu$rad), aussi l'invention consiste à évaluer les conséquences de cette fonction de transfert à travers une commande de type connue lors d'une phase de navigation où les mouvements du porteur sont connus de façon à retrancher cette erreur lors de la navigation.

Le procédé de correction selon l'invention peut en outre comporter l'une ou plusieurs des caractéristiques suivantes prises isolément ou suivant toutes combinaisons techniques possibles.

Selon un mode de réalisation, le procédé de correction comprend une étape complémentaire consistant, lorsque le porteur est sensiblement à l'arrêt, à :

E déterminer la dérive périodique $D(\theta)$ du capteur en fonction de l'angle électrique $\theta$ et l'erreur de facteur d'échelle électrique périodique $FEe(\theta)$ en fonction de l'angle électrique $\theta$, à partir de valeurs angulaires mesurées $\Omega e$ pendant au moins un tour ou une fraction de tour au cours d'une rotation électrique à une vitesse angulaire commandée $\Omega c$, selon la formule :

$$\Omega e - \Omega c = \Omega v + Dm + D(\theta) + (FEem + FEe(\theta)).\Omega c$$

Selon un mode de réalisation, le procédé de correction comprend une étape complémentaire consistant, le porteur n'étant pas nécessairement à l'arrêt, à :

F déterminer la valeur angulaire réelle $\Omega v$ du porteur additionnée d'une valeur de dérive $Dm$ du capteur, en supprimant la dérive périodique $D(\theta)$ et l'erreur de facteur d'échelle électrique périodique $FEe(\theta)$ déterminés à l'étape E.

Selon un mode de réalisation, dans lequel le porteur a une dynamique nulle, la valeur angulaire réelle $\Omega v$ est égale à une projection $\Omega tp$ dans le repère xy du capteur de la rotation terrestre, considérée constante.

Selon un mode de réalisation, dans lequel le porteur a une dynamique faible mais non nulle, ladite valeur angulaire réelle $\Omega v$ est égale à une projection $\Omega tp$ dans le repère xy du capteur de la rotation terrestre considérée constante, les variations de vitesse angulaire déterminées par au moins un accéléromètre sur le porteur étant soustraites. De préférence, les variations de vitesse angulaires sont déterminées par au moins deux accéléromètres, et le cap est considéré fixe en moyenne.

Selon un mode de réalisation, la commande de rotation est appliquée dans un sens selon la plage angulaire de $k\pi$ radians puis dans le sens inverse selon la plage angulaire de $k\pi$ radians. Alternativement, selon un mode de réalisation préféré, la commande de rotation est appliquée toujours dans le même sens.

Selon un mode de réalisation, le procédé de correction comprend une étape complémentaire consistant, le porteur n'étant pas nécessairement à l'arrêt, à :

**G** corriger le facteur d'échelle électrique moyen FEem par la variation ΔFEem de l'erreur de facteur d'échelle électrique moyen entre une dynamique forte et la dynamique faible ou nulle, ladite variation ΔFEem étant déterminée en séparant spectralement la commande de vitesse angulaire de l'onde Ωc de la valeur angulaire réelle Ωv.

Un deuxième objet de l'invention est un capteur angulaire inertiel, ledit capteur inertiel étant disposé sur un porteur et comprenant un résonateur s'étendant autour de deux axes x et y perpendiculaires entre eux définissant un repère capteur xy et comprenant :

- au moins une masse mobile vibrante, ladite au moins une masse mobile comportant au moins deux parties configurées pour vibrer en opposition de phase à une pulsation de vibration et selon une direction x' définissant un repère onde x'y', l'onde de vibration selon x' faisant un angle électrique θ par rapport à l'axe x ;
- une pluralité de transducteurs électrostatiques commandés par des tensions électriques et opérant selon les deux axes x ou y, dont au moins, sur au moins une des deux masses :

-- une paire de transducteurs de détection configurés pour détecter les mouvements de l'onde de vibration selon x et y ; et
-- une paire de transducteurs d'excitation auxquels sont appliquées des forces d'excitation respectivement selon x et y, via une pluralité de commandes d'excitation déterminées par des asservissements à partir des mouvements détectés, configurés pour maintenir l'onde à une amplitude constante via une commande d'amplitude et, le cas échéant, pour faire tourner ladite onde de vibration via une commande de précession ;

le capteur angulaire inertiel comprenant en outre :

- une unité de commande et/ou de traitement adaptée pour mettre en œuvre les étapes du procédé de correction selon le premier objet de l'invention.

Selon un mode de réalisation, le capteur inertiel est axisymétrique.

Selon un mode de réalisation, le capteur inertiel comprend au moins deux masses mobiles vibrantes formant les au moins deux parties configurées pour vibrer en opposition de phase l'une par rapport à l'autre, une masse mobile pouvant être disposée autour d'une autre masse mobile.

Le procédé de correction et le capteur inertiel selon l'invention peuvent comporter l'une quelconque des caractéristiques précédemment énoncées, prises isolément ou selon toutes combinaisons techniquement possibles avec d'autres caractéristiques.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

## BREVE DESCRIPTION DES FIGURES

D'autres caractéristiques, détails et avantages de l'invention ressortiront à la lecture de la description faite en référence aux figures annexées donnés à titre d'exemple et qui représentent, respectivement :

[Fig. 1] La figure 1 déjà citée illustre le résonateur axisymétrique d'un capteur inertiel MEMS selon l'état de l'art, constitué de deux masses mobiles vibrantes disposées l'une autour de l'autre.

[Fig. 2] La figure 2 déjà citée illustre la structure d'un capteur inertiel MEMS selon l'état de l'art avec un résonateur axisymétrique autour de deux axes x et y définissant un repère capteur.

[Fig. 3] La figure 3 déjà citée illustre le fonctionnement d'un capteur inertiel selon l'état de l'art.

[Fig. 4] La figure 4 illustre un procédé de correction selon l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

## DESCRIPTION DETAILLEE DE L'INVENTION

Le procédé de correction selon l'invention s'applique à un capteur angulaire inertiel comprenant un résonateur Res associé à des moyens de mise en vibration du résonateur et à des moyens de détection d'une orientation de la vibration (onde de vibration) par rapport à un repère du capteur.

L'invention peut s'appliquer notamment à un des capteurs présentés précédemment, en rapport avec les figures 1 à 2, ou à des capteurs selon les variantes également précédemment décrites (au moins une masse ou au moins deux masses, capteur axisymétrique ou non axisymétrique, structure plane ou non plane, le capteur MEMS étant un exemple de réalisation).

Un tel capteur angulaire est disposé sur un porteur afin de mesurer les valeurs d'angle et/ou de vitesse angulaire dudit porteur. Le porteur peut être tout ou partie d'un avion, d'un bateau, d'un train, d'une voiture, d'un satellite ou de tout autre véhicule aérien, terrestre ou maritime.

En outre, on peut encore se référer au fonctionnement général de la figure 3, l'unité de traitement UT étant configurée pour appliquer les étapes du procédé selon l'invention. Il peut s'agir d'un ou de plusieurs modules ajoutés dans l'UT pour réaliser les étapes du procédé de correction selon l'invention.

L'onde de vibration OV vibre selon une pulsation de vibration ω. Le procédé de correction selon l'invention s'applique à un capteur inertiel fonctionnant en mode gyromètre ou en mode gyroscope, les asservissements des commandes d'excitation étant en fonctionnement.

Dans un capteur angulaire inertiel vibrant, notamment axisymétrique, on distingue deux repères : le repère capteur xy dont les axes x et y sont les axes contenant les transducteurs d'excitation et de détection du capteur et le repère onde x'y' dans lequel l'axe x' est l'axe de vibration de l'onde OV et l'axe y' est l'axe perpendiculaire à x' dans le plan du capteur. L'axe x' fait avec l'axe x un angle θ dénommé « angle électrique » et le repère x'y' est dénommé « repère onde ».

L'invention consiste à venir commander une rotation de l'onde de vibration OV lorsque la dynamique du porteur est nulle ou du moins faible, de manière à pouvoir supprimer les défauts engendrés sur le signal de mesure par la commande.

Dans la suite de la description détaillée, la valeur angulaire considérée est la vitesse angulaire. La logique de calcul serait la même en considérant l'angle au lieu de la vitesse angulaire (à savoir toutefois, que dans un mode de réalisation, les calculs sont effectués selon le procédé en considérant comme valeur angulaire la vitesse angulaire, puis on se ramène aux angles par intégration ; ou inversement les calculs sont effectués selon le procédé en considérant comme valeur angulaire l'angle, puis on se ramène à la vitesse angulaire par dérivation).

Que ce soit pour l'onde de vibration ou le porteur, les termes « vitesse angulaire » et « vitesse de rotation » sont utilisées indifféremment, désignant la même grandeur.

On va décrire le procédé et les équations dynamiques dans le cas où la dynamique est nulle, c'est à dire que le porteur est à l'arrêt, sans mouvement autre que la rotation terrestre.

De manière connue par l'homme du métier, la vitesse angulaire mesurée Ωe par le capteur vaut :

[Math.1]

$$\Omega e = \big(1 + FEmm + FEm(\theta)\big)\Omega v + Dm + D(\theta) + FT(\Omega c)$$

Où :

Ωc est la vitesse de rotation de l'onde commandée ;
Ωv est la vitesse de rotation réelle du porteur ;
FEmm est l'erreur de facteur d'échelle mécanique moyen, indépendant de l'angle θ ;
le facteur d'échelle mécanique étant le facteur d'échelle lié à une rotation mécanique ;
FEm(θ) est l'erreur de facteur d'échelle mécanique périodique, à moyenne nulle ;
Dm est la dérive moyenne du capteur, indépendant de l'angle θ ;
D(θ) est la dérive périodique du capteur à moyenne nulle ; et
FT(Ωc) correspond à la vitesse de rotation commandée Ωc passée à travers la fonction de transfert du capteur.

La fonction de transfert peut s'exprimer ainsi :

[Math.2]

$$FT(\Omega c) = \big(1 + FEem + FEe(\theta)\big)\Omega c$$

Où :

FEem est l'erreur de facteur d'échelle électrique moyen ; le facteur d'échelle électrique étant le facteur d'échelle lié à une rotation électrique ; et

FEe($\theta$) est l'erreur de facteur d'échelle électrique périodique, à moyenne nulle.

Ainsi, l'équation Math.1 devient :

[Math.3]

$$\Omega e = \left(1 + FEmm + FEm(\theta)\right).\Omega v + Dm + D(\theta) + \left(1 + FEem + FEe(\theta)\right).\Omega c$$

Connaissant la vitesse de rotation commandée $\Omega c$, on peut la soustraire en sortie, ce qui donne :

[Math.4]

$$\Omega e - \Omega c = \left(1 + FEmm + FEm(\theta)\right).\Omega v + Dm + D(\theta) + (FEem + FEe(\theta)).\Omega c$$

On connait ainsi déjà tous les termes à gauche de l'équation, $\Omega e$ et $\Omega c$.

Par ailleurs, à l'arrêt, la vitesse angulaire réelle du porteur $\Omega v$ correspond à une projection de la rotation terrestre $\Omega tp$ considérée constante pour les calculs.

Ainsi, en dynamique nulle, la vitesse angulaire réelle du porteur $\Omega v$ est faible et comme les erreurs de facteurs d'échelle le sont aussi, le produit *(FEmm + FEm($\theta$))$\Omega v$* est négligeable devant les autres termes de l'équation. En plaçant les termes connus à gauche, et en négligeant (donc en supprimant dans l'équation Math.4) le produit *(FEmm + FEm($\theta$)). $\Omega v$*, l'équation devient :

[Math.5]

$$\Omega e - \Omega c = \Omega v + Dm + D(\theta) + (FEem + FEe(\theta)).\Omega c$$

En outre, en moyenne sur la plage angulaire de k$\pi$ radians que parcourt l'angle électrique $\theta$, les valeurs de l'erreur de facteur d'échelle mécanique périodique FEm($\theta$) et de l'erreur de facteur d'échelle électrique périodique FEe($\theta$) sont nulles.

La vitesse angulaire mesurée $\Omega e$ par le capteur peut être mesurée pour plusieurs angles électriques $\theta$, soit pour une rotation continue, soit pour une série d'angles répartis, éventuellement uniformément, sur la plage angulaire de k$\pi$ radians. On peut ensuite déterminer la moyenne $\Omega em$ des vitesses angulaires mesurées $\Omega e$ sur tous les angles.

Par ailleurs, la moyenne $\Omega em$ des vitesses angulaires mesurées $\Omega e$ se retrouve dans l'équation suivante dans laquelle les termes FEe($\theta$) et D($\theta$) ont été supprimés puisque nuls en moyenne sur la plage angulaire de k$\pi$ radians :

[Math.6]

$$\Omega em - \Omega c = \Omega vm + Dm + FEem.\Omega c$$

$\Omega vm$ désigne la moyenne de la vitesse réelle sur la plage angulaire de k$\pi$ radians. A l'arrêt la vitesse réelle est égale à la vitesse moyenne, ainsi $\Omega vm = \Omega v$.

Cette équation a trois inconnues : $\Omega v$, Dm et FEem, mais en pratique, seules les deux valeurs ($\Omega v$ + Dm) d'une part et FEem d'autre part sont observables. Avec deux valeurs de $\Omega c$ on peut en déduire ces deux valeurs observables. La dérive moyenne du capteur Dm est inobservable car elle ne peut pas être distinguée de $\Omega v$, et $\Omega v$ est inconnue puisque c'est ce qu'on cherche. Ainsi au final on a accès à ($\Omega v$ + Dm) d'une part c'est-à-dire la vitesse de rotation réelle du porteur entachée de la dérive moyenne du capteur et à FEem.$\Omega c$ donc à FEem d'autre part.

La moyenne est réalisée à vitesse de rotation $\Omega c$ de l'onde constante, et le porteur garde également la même vitesse $\Omega v$, à dynamique nulle, de sorte que ces termes sont inchangés, de même pour les valeurs moyennes Dm et FEem, par définition.

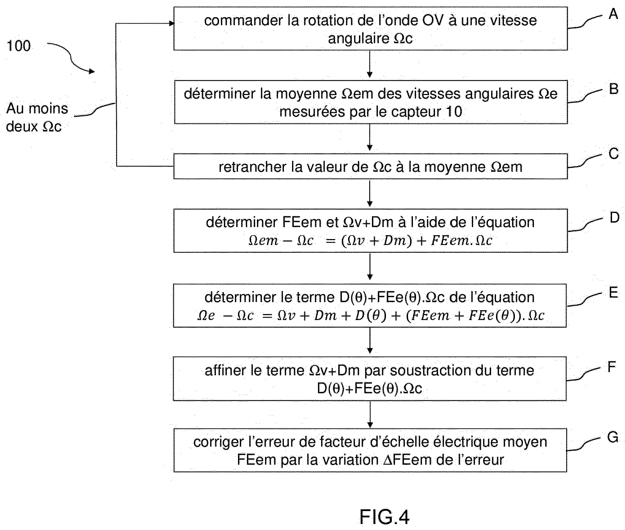

La figure 4 illustre un procédé de correction 100 comprenant les étapes suivantes :

A commander une rotation (rotation électrique) de l'onde de vibration OV selon au moins une vitesse angulaire commandée $\Omega c$ constante, de telle manière que l'angle électrique $\theta$ balaie uniformément au moins une plage angulaire de kπ radians, k étant un entier supérieur ou égal à 1 ; puis

**B** récupérer les vitesses angulaires mesurées Ωe par le capteur inertiel sur la plage angulaire de kπ radians de l'angle électrique θ, pour la vitesse angulaire commandée Ωc, et déterminer une moyenne Ωem des vitesses angulaires mesurées sur ladite plage angulaire ; puis

**C** retrancher la valeur de la vitesse angulaire commandée Ωc à la moyenne des vitesses angulaires mesurées Ωem ; les opérations **A** à **C** étant réalisées pour au moins deux vitesses angulaires commandées différentes ; puis

**D** déterminer FEem et la vitesse angulaire réelle Ωv du porteur entachée de la dérive moyenne du capteur Dm, à l'aide de la formule exprimée pour chaque vitesse angulaire commandée Ωc

$$\Omega em - \Omega c \;=\; (\Omega vm + Dm) + FEem.\Omega c$$

La dérive moyenne Dm du capteur est un résidu de calibration usine. Elle peut être déterminée à l'aide d'un autre capteur angulaire plus précis, ou à l'aide d'une information externe, par exemple lorsque le porteur est immobile avec un cap connu.

De préférence, on peut donner à la vitesse angulaire commandée Ωc des valeurs auxquelles on prévoit de faire tourner le capteur angulaire lorsque le porteur est en mouvement (par exemple pendant la navigation de l'avion ou le déplacement du véhicule). Cela permet d'atteindre une très bonne précision de FEem.

En ayant déterminé Ωv+Dm et FEem, on sort de la moyenne pour revenir à l'équation Math.5

$$\Omega e \;-\; \Omega c \;=\; \Omega v + Dm + D(\theta) + (FEem + FEe(\theta)).\Omega c$$

Dans une étape E, à l'aide de plusieurs valeurs de Ωe-Ωc observées pendant un tour ou une fraction de tour, on peut déterminer le terme D(θ)+FEe(θ).Ωc (fonction de l'angle électrique θ) en supprimant/soustrayant la moyenne FEem.Ωc de chaque observation Ωe-Ωc.

Le terme D(θ)+FEe(θ).Ωc étant ainsi obtenu pour plusieurs angles électriques θ (rotation en continu ou série d'angles sous forme de valeurs discrètes), on peut le modéliser sous la forme d'une fonction polynômiale. Alternativement, on peut réaliser un tableau de correspondance des valeurs de D(θ)+FEe(θ).Ωc en fonction des différents angles électriques θ, valeurs obtenues en exploitant l'équation Math.5, tel que décrit précédemment. En effet, il est généralement difficile de modéliser le terme D(θ)+FEe(θ).Ωc étant donné que les erreurs et dérives présentent des non linéarités assez fortes liées au fait que la commande de rotation a un spectre plus grand que la bande passante de la fonction de transfert du capteur.

Lorsque le porteur n'est plus à l'arrêt mais en navigation, on peut compter sur la stabilité du terme D(θ)+FEe(θ).Ωc qui a été mesuré à l'arrêt du porteur comme décrit ci-dessus.

Une fois ce terme D(θ)+FEe(θ).Ωc déterminé, sous forme de fonction de θ ou de tableau de correspondance en fonction de θ, on peut ainsi dans une étape F le soustraire de la mesure Ωe-Ωc, pour en déduire et/affiner le terme Ωv+Dm même lorsque le porteur n'est plus à l'arrêt.

Ainsi, l'invention permet de déterminer une valeur de vitesse angulaire réelle entachée d'une valeur de dérive moindre, puisqu'il ne reste que Dm, donc plus précise que les procédés de l'état de la technique, et ce, sans que cela nécessite de disposer d'un capteur supplémentaire. En outre, l'invention permet de disposer d'une valeur angulaire également plus précise car elle permet de réduire le terme D(θ)+FEe(θ).Ωc et ainsi l'erreur angulaire qu'elle peut engendrer. L'erreur angulaire qui peut subsister sera réduite dans la mesure où il s'agit d'une erreur bornée dans le temps, et qu'elle est ainsi beaucoup plus négligeable que les dérives qui engendrent des erreurs divergentes dans le temps.

Alternativement ou de manière complémentaire, on peut aussi envisager de filtrer la commande de rotation pour qu'elle soit dans la bande passante du capteur de telle façon que ces non linéarités soient bien plus faibles.

On peut aussi envisager de construire une fonction de transfert équivalente du capteur angulaire, faire passer la commande de rotation dans cette fonction de transfert équivalente pour en déduire les non linéarités supplémentaires.

Dans le cas où la dynamique n'est pas nulle mais est faible, les étapes du procédé et les équations décrites plus avant sont les mêmes, mais la vitesse angulaire réelle du porteur Ωv ne correspond pas seulement à une projection de la rotation terrestre. En effet, on définit la dynamique faible comme étant celle d'un porteur qui n'est pas en navigation (par exemple il est à son point de stationnement), mais qui peut présenter des mouvements faibles liés par exemple aux déplacements des passagers et/ou de l'équipage. Ainsi les mouvements faibles du porteur se font essentiellement autour des deux axes horizontaux (attitudes). Il est alors possible de déterminer les variations d'attitudes à l'aide d'accéléromètres, notamment horizontaux, qui sont généralement disponibles dans un véhicule. La vitesse angulaire est dans ce cas égale à la variation d'accélération horizontale mesurée divisée par la projection de la gravité à laquelle on ajoute la projection de la rotation terrestre. Par exemple si on a un mouvement de tangage sinusoïdal d'amplitude Asin(Ωvt.temps) sur un avion à l'arrêt (A étant l'amplitude de l'oscillation et Ωvt la vitesse angulaire), l'accéléromètre suivant la direction longitudinale de l'avion verra une accélération valant g.Asin(Ωvt.temps), où g désigne la gravité, traduisant une variation de tangage de Asin(Ωvt.temps) et donc une vitesse angulaire d'amplitude AΩvt. Ainsi, même en dynamique faible, la vitesse angulaire réelle peut se déterminer entachée de l'erreur Dm.

Ainsi, alors qu'en dynamique nulle on a l'équation Math.5 :

$$\Omega e - \Omega c = \Omega v + Dm + D(\theta) + \big(FEem + FEe(\theta)\big).\Omega c$$

avec Ω*v* = Ω*tp* (rotation terrestre projetée) considérée constante pour les calculs (mais non connue)

A dynamique faible on a aussi l'équation Math.5 :

$$\Omega e - \Omega c = \Omega v + Dm + D(\theta) + (FEem + FEe(\theta)).\Omega c$$

$$\text{mais avec } \Omega v = \Omega tp + \Omega_{avion}$$

où Ω<sub>avion</sub> (variation de vitesse angulaire due aux mouvements faibles du porteur, ici un avion) se déduit des valeurs accélérométriques.

Ainsi, on se retrouve dans le cas précédent en soustrayant Ω<sub>avion</sub> :

[Math.7]

$$\Omega e - \Omega c - \Omega_{avion} = \Omega tp + Dm + D(\theta) + \big(FEem + FEe(\theta)\big).\Omega c$$

**Ainsi,** à dynamique nulle, on exploite le fait que la vitesse angulaire réelle du porteur Ωv est constante (et correspond à une projection de la rotation terrestre Ωtp), et à dynamique faible, on se ramène au cas de la dynamique nulle en soustrayant les variations de vitesse angulaire déterminées par les accéléromètres.

Par contre, à dynamique forte, on estime la valeur de FEm avec une autre technique car on n'a plus d'hypothèse sur Ωv, ceci est expliqué dans ce qui suit.

Nous allons décrire maintenant ce qui se passe dans le porteur est en navigation (dynamique forte).

Lorsque la dynamique n'est plus nulle ou faible, on peut choisir de compter sur la stabilité de l'erreur de facteur d'échelle électrique moyen FEem.

Alternativement, dans une étape G on peut corriger l'erreur en mesurant les variations ΔFEem de l'erreur de facteur d'échelle électrique moyen FEem entre la dynamique forte et la dynamique faible ou nulle. Un moyen pour déterminer les variations ΔFEem est de séparer spectralement la variable vitesse angulaire réelle Ωv et la commande de vitesse angulaire de l'onde Ωc, c'est-à-dire concrètement de choisir une commande de vitesse angulaire Ωc dont le spectre peut être séparé par filtrage du spectre utile de la vitesse angulaire réelle Ωv. Ωc peut s'exprimer par exemple sous la forme Ωc$_0$ + Ωcf où Ωc$_0$ est une vitesse angulaire constante permettant de faire tourner l'angle et Ωcf s'exprime sous la forme d'une fonction harmonique (sinusoïdale par exemple) choisie en dehors de la bande passante utile du capteur. Ainsi, par filtrage, en se plaçant en dehors de la bande passante utile du capteur et autour de la fréquence de la fonction Ωcf, on peut accéder aux variations du terme (FEem+FEe(θ)).Ωcf et ainsi à la valeur ΔFEem qui est la variation de l'erreur de facteur d'échelle électrique moyen FEem.

Après correction de FEem et détermination du terme D(θ)+FEe(θ).Ωc comme expliqué plus avant, on peut reprendre la formule Math.4 donnant la vitesse réelle du porteur pendant la navigation :

$$\Omega e - \Omega c - FEe(\theta).\Omega c - FEem.\Omega c - D(\theta) = \Omega v + \big(FEmm + FEm(\theta)\big)\Omega v + Dm$$

Les termes déterminés sont à gauche de l'équation, et ainsi l'ensemble du terme de gauche correspond à une vitesse mesurée et corrigée.

Les erreurs de facteur d'échelle mécanique FEmm+FEm(θ) et Dm peuvent être réglées en usine pour être les plus petites possibles en opérationnel.

Ainsi cela permet de déterminer une valeur de vitesse angulaire réelle corrigée, c'est-à-dire d'affiner l'estimation de ladite valeur.

En d'autres termes, l'invention permet d'obtenir une vitesse angulaire réelle Ωv seulement entachée des erreurs FEmm+FEm(θ) et Dm que l'on peut régler en usine pour être les plus bas possible, c'est-à-dire une vitesse angulaire déterminée sans les erreurs FEem, D(θ) et FEe(θ). Cela permet notamment de supprimer le terme D(θ) qui est beaucoup plus important que le terme Dm.

Les différents modes présentés peuvent être combinés entre eux, sauf indication contraire.

En outre, la présente invention n'est pas limitée aux modes de réalisation précédemment décrits mais s'étend à tout mode de réalisation entrant dans la portée des revendications.

## Revendications

1. Procédé de correction (100) de la mesure d'un capteur inertiel vibrant (10), ledit capteur inertiel étant disposé sur un porteur et comprenant un résonateur (Res) s'étendant autour de deux axes x et y perpendiculaires entre eux définissant un repère capteur xy et comprenant :

   - au moins une masse mobile vibrante (M1), ladite au moins une masse mobile comportant au moins deux parties configurées pour vibrer en opposition de phase à une pulsation de vibration ($\omega$) et selon une direction x' définissant un repère onde x'y', l'onde de vibration (OV) selon x' faisant un angle électrique $\theta$ par rapport à l'axe x ;
   - une pluralité de transducteurs électrostatiques commandés par des tensions électriques et opérant selon les deux axes x ou y, lesdits transducteurs comprenant au moins :

      -- une paire de transducteurs de détection (Dx, Dy) configurés pour détecter les mouvements de l'onde de vibration selon x et y ;
      -- une paire de transducteurs d'excitation (Ex, Ey) auxquels sont appliquées des forces d'excitation respectivement selon x et y, via une pluralité de commandes d'excitation déterminées par des asservissements à partir des mouvements détectés, configurés pour maintenir l'onde à une amplitude constante via une commande d'amplitude (Ca) et, éventuellement, pour faire tourner ladite onde de vibration via une commande de précession (Cp) ;
      le procédé de correction s'appliquant lorsque le capteur est en fonctionnement avec une onde de vibration (OV) vibrant selon l'axe x' ;
      **caractérisé en ce que**
      ledit procédé comprend les étapes consistant, lorsque le porteur est sensiblement à l'arrêt, à :

      **A** commander une rotation électrique de l'onde de vibration (OV) selon une valeur angulaire commandée $\Omega c$, de telle manière que l'angle électrique $\theta$ balaie au moins une plage angulaire de $k\pi$ radians, k étant un entier supérieur ou égal à 1, selon lequel la valeur angulaire est comprise dans l'ensemble comportant une vitesse angulaire et un angle ; puis
      **B** récupérer les valeurs angulaires mesurées $\Omega e$ par le capteur inertiel (10) sur la plage angulaire de $k\pi$ radians de l'angle électrique $\theta$ pour la valeur angulaire commandée $\Omega c$, et déterminer la moyenne $\Omega em$ des valeurs angulaires mesurées sur ladite plage angulaire ; puis
      **C** retrancher la valeur angulaire commandée $\Omega c$ à la moyenne $\Omega em$ des valeurs angulaires mesurées ; les étapes **A** à **C** étant réalisées pour au moins deux valeurs angulaires commandées différentes de manière à déterminer au moins deux moyennes des valeurs angulaires mesurées ; puis
      **D** déterminer :

         - l'erreur de facteur d'échelle électrique moyen FEem, le facteur d'échelle électrique correspondant au rapport entre la valeur angulaire mesurée due à la commande de rotation électrique, et <u>la</u> valeur angulaire commandée $\Omega c$, et
         - la valeur angulaire réelle $\Omega v$ du porteur additionnée d'une valeur de dérive Dm du capteur,

      ladite détermination étant réalisée à partir des valeurs angulaires commandées $\Omega c$ et des moyennes $\Omega em$ des valeurs angulaires mesurées, selon la formule :

$$\Omega em - \Omega c = (\Omega v + Dm) + FEem.\Omega c.$$

2. Procédé de correction (100) selon la revendication 1, comprenant une étape complémentaire consistant, lorsque le porteur est sensiblement à l'arrêt, à :
   **E** déterminer la dérive périodique $D(\theta)$ du capteur en fonction de l'angle électrique $\theta$ et l'erreur de facteur d'échelle électrique périodique $FEe(\theta)$ en fonction de l'angle électrique $\theta$, à partir de valeurs angulaires mesurées $\Omega e$ pendant au moins un tour ou une fraction de tour au cours d'une rotation électrique à une vitesse angulaire commandée $\Omega c$,

selon la formule :

$$\Omega e \; - \Omega c \; = \Omega v + Dm + D(\theta) + (FEem + FEe(\theta)).\Omega c$$

3. Procédé de correction (100) selon la revendication 2, comprenant une étape complémentaire consistant, le porteur n'étant pas nécessairement à l'arrêt, à :
**F** déterminer la valeur angulaire réelle $\Omega v$ du porteur additionnée d'une valeur de dérive Dm du capteur, en supprimant la dérive périodique D($\theta$) et l'erreur de facteur d'échelle électrique périodique FEe($\theta$) déterminés à l'étape **E.**

4. Procédé de correction (100) selon l'une des revendications 1 à 3, le porteur ayant une dynamique nulle, ladite valeur angulaire réelle $\Omega v$ étant égale à une projection $\Omega tp$ dans le repère xy du capteur de la rotation terrestre, considérée constante.

5. Procédé de correction (100) selon l'une des revendications 1 à 3, le porteur ayant une dynamique faible mais non nulle, ladite valeur angulaire réelle $\Omega v$ étant égale à une projection $\Omega tp$ dans le repère xy du capteur de la rotation terrestre considérée constante, les variations de vitesse angulaire déterminées par au moins un accéléromètre sur le porteur étant soustraites, les variations de vitesse angulaire étant de préférence déterminées par au moins deux accéléromètres et en considérant un cap fixe en moyenne.

6. Procédé de correction (100) selon l'une des revendications 1 à 5, la commande de rotation étant appliquée toujours dans le même sens.

7. Procédé de correction (100) selon l'une des revendications 1 à 6, comprenant une étape complémentaire consistant, le porteur n'étant pas nécessairement à l'arrêt, à :
**G** corriger le facteur d'échelle électrique moyen FEem par la variation $\Delta$FEem de l'erreur de facteur d'échelle électrique moyen FEem entre la dynamique forte et la dynamique faible ou nulle, ladite variation $\Delta$FEem étant déterminée en séparant spectralement la commande de vitesse angulaire de l'onde $\Omega c$ de la valeur angulaire réelle $\Omega v$.

8. Capteur angulaire inertiel (10), ledit capteur inertiel étant disposé sur un porteur et comprenant un résonateur (Res) s'étendant autour de deux axes x et y perpendiculaires entre eux définissant un repère capteur xy et comprenant :

    - au moins une masse mobile vibrante (M1) ladite au moins une masse mobile comportant au moins deux parties configurées pour vibrer en opposition de phase à une pulsation de vibration ($\omega$) et selon une direction x' définissant un repère onde x'y', l'onde de vibration (OV) selon x' faisant un angle électrique $\theta$ par rapport à l'axe x ;
    - une pluralité de transducteurs électrostatiques commandés par des tensions électriques et opérant selon les deux axes x ou y, dont au moins, sur au moins une des deux masses :

        -- une paire de transducteurs de détection (Dx, Dy) configurés pour détecter les mouvements de l'onde de vibration selon x et y ;
        -- une paire de transducteurs d'excitation (Ex, Ey) auxquels sont appliquées des forces d'excitation respectivement selon x et y, via une pluralité de commandes d'excitation déterminées par des asservissements à partir des mouvements détectés, configurés pour maintenir l'onde à une amplitude constante via une commande d'amplitude (Ca) et, le cas échéant, pour faire tourner ladite onde de vibration via une commande de précession (Cp) ;
        le capteur angulaire inertiel comprenant en outre :

            - une unité de commande et/ou de traitement adaptée pour mettre en œuvre les étapes du procédé de correction (100) selon l'une des revendications 1 à 7.

9. Capteur angulaire inertiel (10) selon la revendication 8, ledit capteur inertiel étant axisymétrique.

10. Capteur angulaire inertiel (10) selon la revendication 8 ou la revendication 9, comprenant au moins deux masses mobiles vibrantes (M1, M2) formant les au moins deux parties configurées pour vibrer en opposition de phase l'une par rapport à l'autre, une masse mobile pouvant être disposée autour d'une autre masse mobile.

**Patentansprüche**

1. Verfahren zur Korrektur (100) der Messung eines schwingenden Inertialsensors (10), wobei der Inertialsensor auf einem Träger angeordnet ist und einen Resonator (Res) umfasst, der sich um zwei zueinander senkrechte Achsen x und y erstreckt, die ein xy-Sensor-Koordinatensystem definieren, und Folgendes umfassend:

   - mindestens eine bewegliche Schwingungsmasse (M1), wobei die mindestens eine bewegliche Masse mindestens zwei Teile umfasst, die so konfiguriert sind, dass sie gegenphasig mit einer Schwingungspulsation (ω) und entlang einer Richtung x' schwingen, die ein x'y'-Wellen-Koordinatensystem definiert, wobei die Schwingungswelle (OV) entlang x' einen elektrischen Winkel θ in Bezug auf die x-Achse bildet;
   - eine Vielzahl von elektrostatischen Wandlern, die durch elektrische Spannungen angesteuert werden und entlang der beiden Achsen x oder y arbeiten, wobei die Wandler mindestens Folgendes umfassen:

      -- ein Paar Detektionswandler (Dx, Dy), die so konfiguriert sind, dass sie die Bewegungen der Schwingungswelle entlang x und y erkennen;
      -- ein Paar Anregungswandler (Ex, Ey), an die entlang x und y Anregungskräfte angelegt werden, über eine Vielzahl von Anregungssteuerungen, die durch Servosteuerungen auf der Grundlage der erfassten Bewegungen bestimmt werden und konfiguriert sind, um die Welle über einen Amplituden-Steuerbefehl (Ca) auf einer konstanten Amplitude zu halten und, wahlweise, um die Schwingungswelle über einen Präzessions-Steuerbefehl (Cp) zu drehen;
      wobei das Korrekturverfahren angewandt wird, wenn der Sensor mit einer Schwingungswelle (OV) betrieben wird, die entlang der x'-Achse schwingt;
      **dadurch gekennzeichnet,**
      **dass** das Verfahren die folgenden Schritte umfasst, wenn der Träger im Wesentlichen stillsteht:

      A Ansteuern einer elektrischen Drehung der Schwingungswelle (OV) gemäß einem angesteuerten Winkelwert Ωc, sodass der elektrische Winkel θ mindestens einen Winkelbereich von kπ Radianten abtastet, wobei k eine Ganzzahl größer oder gleich 1 ist, gemäß welcher der Winkelwert in dem Satz umfasst ist, der eine Winkelgeschwindigkeit und einen Winkel umfasst; und anschließend
      B Abrufen der vom Trägheitssensor (10) gemessenen Winkelwerte Ωe im Winkelbereich von kπ Radianten des elektrischen Winkels θ für den angesteuerten Winkelwert Ωc und Bestimmen des Mittelwertes Ωem der im genannten Winkelbereich gemessenen Winkelwerte; und anschließend
      C Subtrahieren des angesteuerten Winkelwert Ωc vom Mittelwert Ωem der gemessenen Winkelwerte; wobei die Schritte A bis C für mindestens zwei verschiedene angesteuerte Winkelwerte durchgeführt werden, um mindestens zwei Mittelwerte der gemessenen Winkelwerte zu bestimmen, und anschließend
      D Bestimmen:

         - des mittleren elektrischen Skalierungsfaktors FEem, des elektrischen Skalierungsfaktors, der dem Verhältnis vom gemessenen Winkelwert aufgrund des elektrischen Drehsteuerbefehls zum angesteuerten Winkelwert Ωc entspricht, und
         - des tatsächlichen Winkelwerts Ωv des Trägers, zuzüglich eines Driftwerts Dm des Sensors,

      wobei die Bestimmung auf der Grundlage der angesteuerten Winkelwerte Ωc und der Mittelwerte Ωem der gemessenen Winkelwerte gemäß der Formel durchgeführt wird:

$$\Omega em - \Omega c = (\Omega v + Dm) + FEem.\Omega c.$$

2. Korrekturverfahren (100) nach Anspruch 1, umfassend einen zusätzlichen Schritt, der im Folgenden besteht, wenn der Träger im Wesentlichen stillsteht:
   E Bestimmen der periodischen Drift D(θ) des Sensors in Abhängigkeit vom elektrischen Winkel θ und des periodischen elektrischen Skalenfaktorfehlers FEe(θ) in Abhängigkeit vom elektrischen Winkel θ, anhand von gemessenen Winkelwerten Ωe während mindestens einer Umdrehung oder eines Teils einer Umdrehung im Verlauf einer elektrischen Drehung bei einer angesteuerten Winkelgeschwindigkeit Ωc, gemäß folgender Formel:

$$\Omega e - \Omega c = \Omega v + Dm + D(\theta) + \big(FEem + FEe(\theta)\big).\Omega c.$$

**3.** Korrekturverfahren (100) nach Anspruch 2, umfassend einen zusätzlichen Schritt, der in Folgendem besteht, wenn der Träger nicht notwendigerweise stillsteht:
F Bestimmen des tatsächlichen Winkelwerts $\Omega v$ des Trägers, zu dem ein Driftwert Dm des Sensors addiert wird, durch Unterdrücken der periodischen Drift $D(\theta)$ und des periodischen elektrischen Skalenfaktorfehlers $FEe(\theta)$, die im Schritt E bestimmt wurden.

**4.** Korrekturverfahren (100) nach einem der Ansprüche 1 bis 3, wobei der Träger eine Dynamik gleich null aufweist, wobei der tatsächliche Winkelwert $\Omega v$ gleich einer Projektion $\Omega tp$ im xy-Koordinatensystem des Erdsatellitensensors ist, die als konstant betrachtet wird.

**5.** Korrekturverfahren (100) nach einem der Ansprüche 1 bis 3, wobei der Träger eine geringe Dynamik jedoch ungleich null aufweist, der tatsächliche Winkelwert $\Omega v$ gleich einer Projektion $\Omega tp$ im xy-Koordinatensystem des Sensors der Erdrotation ist, die als konstant betrachtet wird, wobei die von mindestens einem Beschleunigungsmesser auf dem Träger bestimmten Winkelgeschwindigkeitsänderungen subtrahiert werden. wobei die Winkelgeschwindigkeitsänderungen vorzugsweise von mindestens zwei Beschleunigungsmessern bestimmt werden und im Mittelwert einen festen Kurs betrachten.

**6.** Korrekturverfahren (100) nach einem der Ansprüche 1 bis 5, wobei der Drehsteuerbefehl immer in der gleichen Richtung angelegt wird.

**7.** Korrekturverfahren (100) nach einem der Ansprüche 1 bis 6, umfassend einen zusätzlichen Schritt, der in Folgendem besteht, wenn der Träger nicht notwendigerweise stillsteht:
G Korrigieren des mittleren elektrischen Skalierungsfaktors FEem um die Änderung $\Delta$FEem des mittleren elektrischen Skalierungsfaktorfehlers FEem zwischen der hohen Dynamik und der niedrigen oder Null-Dynamik, wobei die Änderung $\Delta$FEem bestimmt wird, indem die Winkelgeschwindigkeitssteuerung der Welle $\Omega c$ spektral vom tatsächlichen Winkelwert $\Omega v$ getrennt wird.

**8.** Inertialwinkelsensor (10), wobei der Inertialsensor auf einem Träger angeordnet ist und einen Resonator (Res) umfasst, der sich um zwei zueinander senkrechte Achsen x und y erstreckt, die ein xy-Sensor-Koordinatensystem definieren, und Folgendes umfasst:

- mindestens eine bewegliche Schwingungsmasse (M1), wobei die mindestens eine bewegliche Masse mindestens zwei Teile umfasst, die so konfiguriert sind, dass sie gegenphasig mit einer Schwingungspulsation ($\omega$) und entlang einer Richtung x' schwingen, die ein x'y'-Wellen-Koordinatensystem definiert, wobei die Schwingungswelle (OV) entlang x' einen elektrischen Winkel $\theta$ in Bezug auf die x-Achse bildet;
- eine Vielzahl von elektrostatischen Wandlern, die durch elektrische Spannungen angesteuert werden und entlang der beiden Achsen x oder y arbeiten, wovon mindestens, an mindestens einer der beiden Massen:

-- ein Paar Detektionswandler (Dx, Dy), die so konfiguriert sind, dass sie die Bewegungen der Schwingungswelle entlang x und y erkennen;
-- ein Paar Anregungswandler (Ex, Ey), an die entlang x und y Anregungskräfte angelegt werden, über eine Vielzahl von Anregungssteuerbefehlen, die durch Servosteuerungen auf der Grundlage der erfassten Bewegungen bestimmt werden, die konfiguriert sind, um die Welle über einen Amplituden-Steuerbefehl (Ca) auf einer konstanten Amplitude zu halten und, wahlweise, um die Schwingungswelle über einen Präzessions-Steuerbefehl (Cp) zu drehen; wobei der Inertialwinkelsensor ferner Folgendes umfasst:

- eine Steuer- und/oder Verarbeitungseinheit, die angepasst ist, um die Schritte des Korrekturverfahrens (100) nach einem der Ansprüche 1 bis 7 auszuführen.

**9.** Inertialwinkelsensor (10) nach Anspruch 8, wobei der Inertialwinkelsensor achsensymmetrisch ist.

**10.** Inertialwinkelsensor (10) nach Anspruch 8 oder Anspruch 9, umfassend mindestens zwei bewegliche Schwingungsmassen (M1, M2), welche die mindestens zwei Teile bilden, die so konfiguriert sind, dass sie gegenphasig zueinander schwingen, wobei eine bewegliche Masse um eine andere bewegliche Masse herum angeordnet werden kann.

**Claims**

1. A method for correcting (100) the measurement of a vibrating inertial sensor (10), said inertial sensor being disposed on a carrier and comprising a resonator (Res) extending around two mutually perpendicular x and y axes defining an xy sensor frame of reference and comprising:

   - at least one vibrating movable mass (M1), said at least one movable mass comprising at least two portions configured to vibrate in phase opposition at a vibration pulsation ($\omega$) and in a direction x' defining an x'y' wave frame of reference, the vibration wave (OV) along x' forming an electrical angle $\theta$ relative to the x-axis;
   - a plurality of electrostatic transducers controlled by electrical voltages and operating along the two axes x or y, said transducers comprising at least:

      -- a pair of detection transducers (Dx, Dy) configured to detect the movements of the vibration wave along x and y;
      -- a pair of excitation transducers (Ex, Ey), to which excitation forces are respectively applied along x and y, via a plurality of excitation commands determined by automatic controls from the detected movements, configured to maintain the wave at a constant amplitude via an amplitude command (Ca) and, optionally, to rotate said vibration wave via a precession command (Cp);
      the correction method being applied when the sensor is operating with a vibration wave (OV) vibrating along the x'-axis;
      **characterised in that**
      said method comprises the following steps, when the carrier is substantially stationary, of:

      A commanding an electrical rotation of the vibration wave (OV) according to a commanded angular value $\Omega c$, such that the electrical angle $\theta$ scans at least one angular range of $k\pi$ radians, k being an integer greater than or equal to 1, according to which the angular value is comprised in the set comprising an angular velocity and an angle, then
      B retrieving the measured angular values $\Omega e$ measured by the inertial sensor (10) over the angular range of $k\pi$ radians of the electrical angle $\theta$ for the commanded angular value $\Omega c$, and determining the mean $\Omega em$ of the angular values measured over said angular range; then
      C subtracting the commanded angular value $\Omega c$ from the mean $\Omega em$ of the measured angular values; steps A to C being carried out for at least two different commanded angular values so as to determine at least two means of the measured angular values; then
      D determining:

      - the mean electrical scale factor error FEem, the electrical scale factor corresponding to the ratio of the measured angular value due to the electrical rotation command, to the commanded angular value $\Omega c$; and
      - the actual angular value $\Omega v$ of the carrier plus a drift value Dm of the sensor; said determining being carried out on the basis of the commanded angular values $\Omega c$ and of the means $\Omega em$ of the measured angular values, according to the following formula:

$$\Omega em - \Omega c = (\Omega v + Dm) + FEem.\Omega c$$

2. The correction method (100) according to claim 1, comprising an additional step, when the carrier is substantially stationary, of:
   E determining the periodic drift $D(\theta)$ of the sensor as a function of the electrical angle $\theta$ and the periodic electrical scale factor error $FEe(\theta)$ as a function of the electrical angle $\theta$, on the basis of the measured angular values $\Omega e$ during at least one turn or fraction of a turn during an electrical rotation at a commanded angular velocity $\Omega c$, according to the following formula:

$$\Omega e - \Omega c = \Omega v + Dm + D(\theta) + (FEem + FEe(\theta)).\Omega c$$

3. The correction method (100) according to claim 2, comprising an additional step, the carrier not necessarily being stationary, of:
   F determining the actual angular value $\Omega v$ of the carrier plus a drift value Dm of the sensor, by removing the periodic

drift D($\theta$) and the periodic electrical scale factor error FEe($\theta$) determined in step E.

4. The correction method (100) according to one of claims 1 to 3, the carrier having a zero dynamic range, said actual angular value $\Omega$v being equal to a projection $\Omega$tp in the xy sensor frame of reference of the terrestrial rotation, which is considered to be constant.

5. The correction method (100) according to one of claims 1 to 3, the carrier having a low but non-zero dynamic range, said actual angular value $\Omega$v being equal to a projection $\Omega$tp in the xy sensor frame of reference of the terrestrial rotation, which is considered to be constant, with the variations in angular velocity determined by at least one accelerometer on the carrier being subtracted, the variations in angular velocity preferably being determined by at least two accelerometers and by considering a mean fixed heading.

6. The correction method (100) according to one of claims 1 to 5, the rotation command being always applied in the same direction.

7. The correction method (100) according to one of claims 1 to 6, comprising an additional step, the carrier not necessarily being stationary, of:
G correcting the mean electrical scale factor FEem by the variation $\Delta$FEem of the mean electrical scale factor error FEem between the high dynamic range and the low or zero dynamic range, said variation $\Delta$FEem being determined by spectrally separating the angular velocity command of the wave $\Omega$c from the actual angular value $\Omega$v.

8. An inertial angular sensor (10), said inertial sensor being disposed on a carrier and comprising a resonator (Res) extending around two mutually perpendicular x and y axes defining an xy sensor frame of reference and comprising:

- at least one vibrating movable mass (M1), said at least one movable mass comprising at least two portions configured to vibrate in phase opposition at a vibration pulsation ($\omega$) and in a direction x' defining an x'y' wave frame of reference, the vibration wave (OV) along x' forming an electrical angle $\theta$ relative to the x-axis;
- a plurality of electrostatic transducers controlled by electrical voltages and operating along the two axes x or y, including at least, on at least one of the two masses:

-- a pair of detection transducers (Dx, Dy) configured to detect the movements of the vibration wave along x and y;
-- a pair of excitation transducers (Ex, Ey), to which excitation forces are respectively applied along x and y, via a plurality of excitation commands determined by automatic controls from the detected movements, configured to maintain the wave at a constant amplitude via an amplitude command (Ca) and, optionally, to rotate said vibration wave via a precession command (Cp); the inertial angular sensor further comprising:

- a control and/or processing unit adapted to implement the steps of the correction method (100) according to one of claims 1 to 7.

9. The inertial angular sensor (10) according to claim 8, said inertial sensor being axisymmetric.

10. The inertial angular sensor (10) according to claim 8 or claim 9, comprising at least two vibrating movable masses (M1, M2) forming the at least two portions configured to vibrate in phase opposition relative to each other, one movable mass being able to be disposed around another movable mass.

FIG.1

FIG.2

FIG.3

100

Au moins
deux Ωc

commander la rotation de l'onde OV à une vitesse
angulaire Ωc — A

déterminer la moyenne Ωem des vitesses angulaires Ωe
mesurées par le capteur 10 — B

retrancher la valeur de Ωc à la moyenne Ωem — C

déterminer FEem et Ωv+Dm à l'aide de l'équation
$$\Omega em - \Omega c = (\Omega v + Dm) + FEem.\,\Omega c$$ — D

déterminer le terme D(θ)+FEe(θ).Ωc de l'équation
$$\Omega e - \Omega c = \Omega v + Dm + D(\theta) + (FEem + FEe(\theta)).\,\Omega c$$ — E

affiner le terme Ωv+Dm par soustraction du terme
D(θ)+FEe(θ).Ωc — F

corriger l'erreur de facteur d'échelle électrique moyen
FEem par la variation ΔFEem de l'erreur — G

FIG.4

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2960625 A
- US 6598455 B1
- EP 0392104 A1
- FR 2937414
- FR 2959009
- FR 2958029
- WO 2010072922 A1
- WO 2016189078 A1
- FR 2939192 A1